# EUROPEAN PATENT SPECIFICATION

(11) **EP 1 155 651 B1**
(45) Date of publication and mention of the grant of the patent: **21.04.2004**
(21) Application number: 01302386.6
(22) Date of filing: 14.03.2001
(51) Int. Cl.: A47K 13/04, A47K 13/06

(54) **Fastening arrangement for toilet seat buffer**
Befestigungsanordnung für ein WC-Brillenpufferelement
Système de fixation pour tampons de siège de toilette

(30) Priority: 16.05.2000 GB 0011620
(43) Date of publication of application: 21.11.2001
(73) Proprietor: Polypipe Bathroom & Kitchen Products Ltd., Denton, Manchester M34 3AB (GB)
(72) Inventor: Johnstone, Christopher Robert, Polypipe Bathroom &, Denton, Manchester M34 3AB (GB)
(74) Representative: Sherrard-Smith, Hugh

(56) References cited:
- EP-A- 0 320 569
- FR-A- 2 143 297

## Description

The present invention relates to a fastening arrangement for connecting a buffer to a toilet seat and a method of fastening a first to a second part using the fastening arrangement in order to connect a buffer to a toilet seat.

FR 72 22575 discloses a furniture hinge in which a screw is located in a slot of a support by passing the head of the screw through an enlarged opening in the slot and then guiding the slot such that the shaft of the screw enters a narrow section of the slot. A circular rib on the base of the head of the screw engages with one of a number of circular grooves to exert a high clamping force against any longitudinal movement.

EP-A-0 320 569 discloses a fastening arrangement according to the preamble of claim 1.

According to one aspect of the present invention a fastening arrangement is defined in Claim 1.

The fastener may extend through an opening in the first part. The fastener may engage with the second part to attach the first part to the second part. The fastener may be movable from a first position when attached to the second part, in which relative pivotal and or translational movement of the abutment and the second part can occur and a second position in which the first part is held in position relative to the second part.

The first part may include a slot through which the fastener can extend.

Both the projection and the recess may include arcuate portions which, when co-operating, permit pivotal movement of the first part.

The co-operating portion and recess may assist in holding the first and the second parts together in the required position for instance by resisting relative sliding movement of the parts which may be a resistance to relative translational sliding.

The first part may include an abutment having a substantially vertical face arranged to abut with the inwardly facing surface of a toilet bowl. The second part may comprise a toilet seat.

The present invention also includes a method of fastening a first part to a second part, as claimed in Claim 9.

The method may comprise first of all loosely connecting the first and second parts in order that relative translational or relative pivotal or both relative translational and relative pivotal movement can occur before securing the first and second parts.

The present invention can be carried into practice in various ways but one embodiment will now be described, by way of example, and with reference to the accompanying drawings, in which:-
Figure 1 is a plan view of the toilet seat arrangement;

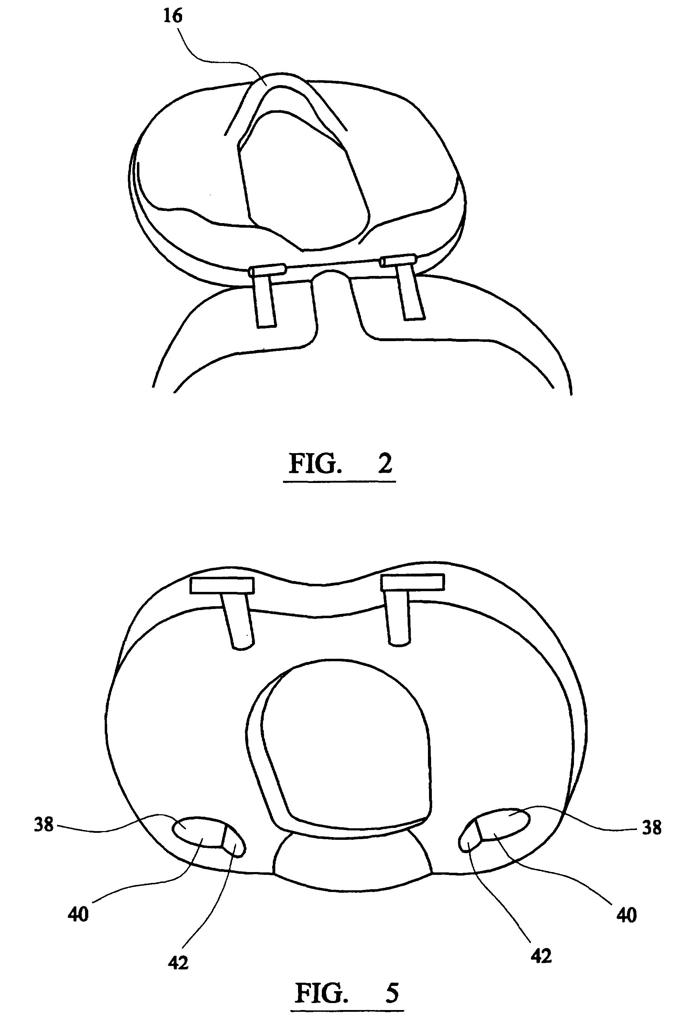

Figure 2 is a perspective plan view looking forward on to the toilet seat;

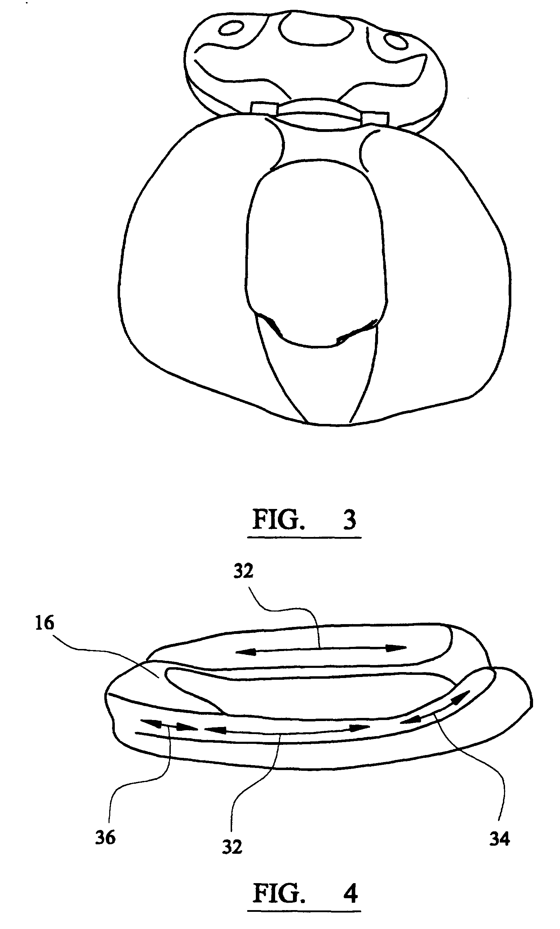

Figure 3 is a front perspective view of the toilet seat;
Figure 4 is a side perspective view of the toilet seat;
Figure 5 is an underneath view from the rear of the toilet seat;
Figure 6 is a perspective view from above and the rear of the lid when in the closed position;
Figure 7 is a side view of a buffer used on the underside of the seat;
Figure 8 is a plan view of Figure 7;
Figure 9 is a left hand end view of Figure 7;
Figure 10 is an underneath view of Figure 7, and
Figure 11 is a detailed view of the underside of the portion of the seat that the buffer is arranged to co-operate with.

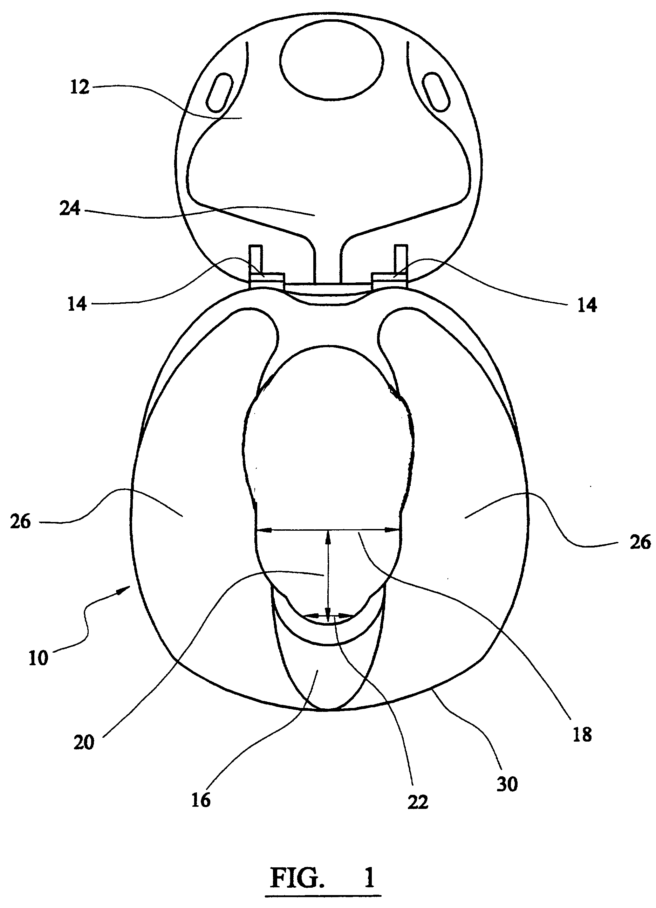

As shown in Figure 1, the toilet seat arrangement includes a seat 10 and a lid 12. The lid 12 is pivotally connected to the seat 10 by a pair of spaced conventional hinges 14.

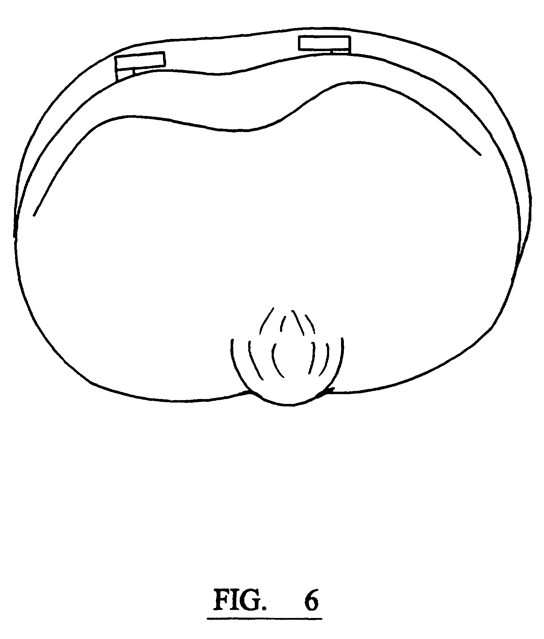

In the closed position of the lid shown in Figure 6, substantially the whole of the seat is covered.

As seen in Figure 5, the underside of the seat includes two buffers 38. Each buffer includes a downwardly facing surface 40 that is arranged to abut with the upwardly facing surface of a toilet bowl and a downwardly facing lug 42. The buffer and the lug may be comprised by single mouldings such as an injection moulding, for instance of plastics. Each lug is arranged to engage with the inside of the toilet bowl to restrict movement of the seat outwardly by the relevant buffer being pulled into contact with or bearing against the inwardly facing surface of the toilet bowl.

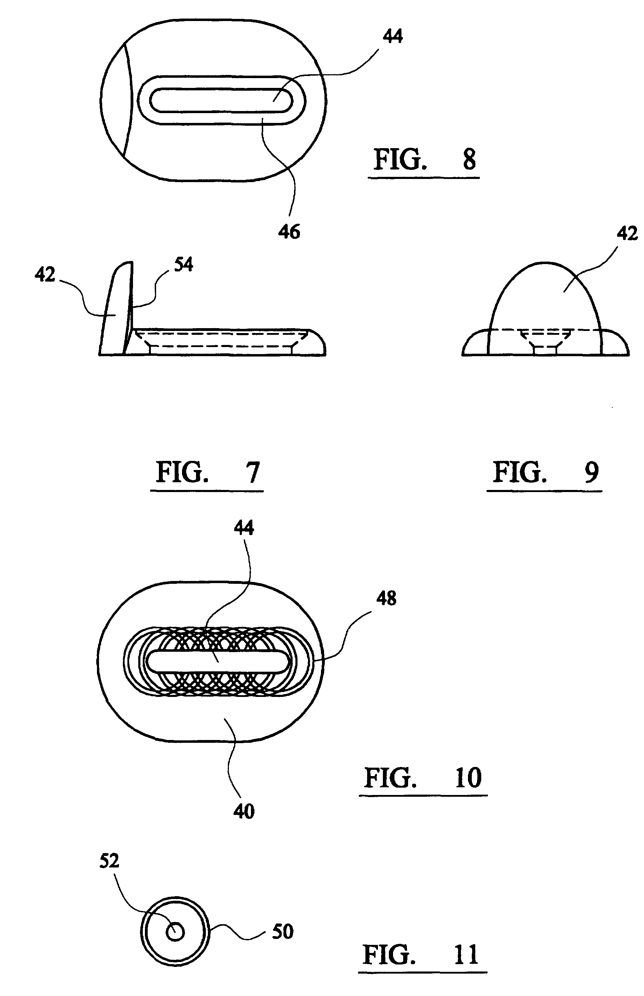

Toilet bowls come in many different shapes and sizes. Accordingly, the buffers are adjustable both in the sideways direction with respect to the seat and also in an angular direction. Details of the buffer 38 are shown in Figures 7 to 10.

The buffer includes an elongate slot 44 that includes a downwardly inclined side wall 46 extending along the length of and around the ends of the slot. The underside of the buffer includes a number of grooves 48 all having different central locations along the slot 44 and all having the same diameter. The underneath of the seat includes a raised rib 50 having a threaded blind bore 52 concentric therewith. With the slot 44 mounted over the bore 52, the rib 50 can be brought into alignment with a selected one of the grooves 48 such that the buffer is not able to move translationally with respect to the seat. A threaded member can then be passed through the slot 44 and screwed down into the bore 52 to hold the buffer in position. The buffer can then be rotated to the required angular orientation by movement of the relevant bore 48 around the rib 50. The threaded member can then be tightened up to hold the two in their required position. The co-operation of the rib and groove assist in maintaining the buffer in the required position. The flange 52 will then have its outwardly facing substantially vertically extending face 54 located immediately adjacent to the inwardly facing surface of the toilet bowl.

In an alternative embodiment (not shown) the seat may not have a lid.

## Claims

1. A fastening arrangement for connecting a buffer to a toilet seat, including a first part (38) arranged to be secured to a second part (10) by a fastener, the first and second parts, prior to being secured, being movable relative to each other, the first and second parts being movable relative to each other both translationally and pivotally, and at least one of the first or second parts including a projection (50) and the other of those parts including a recess (48), **characterised in that** at least part of at least one of the recess (48) or projection includes an arcuate surface with there being a plurality of such arcuate surfaces spaced translationally from each other whereby the first and second parts can co-operate with each other at each of the plurality of spaced different surfaces wherein at each spaced surface the first part is permitted to move pivotally with respect to the second part with that pivotal movement being controlled by the co-operating projection (50) and recess (48), along the arcuate surface.

2. A fastening arrangement as claimed in Claim 1 in which the first (38) and second (10) parts are attached to each other and are movable both translationally and pivotally relative to each other prior to the fastener securing those parts together.

3. A fastening arrangement as claimed in Claim 1 or 2 in which the fastener is arranged to engage with the second part (10) to secure the first (38) and second (10) parts together.

4. A fastening arrangement as claimed in any preceding claim wherein the fastener is arranged to extend through an opening in the first part (38).

5. A fastening arrangement as claimed in Claim 4 wherein the opening in the first part (38) comprises a slot (44).

6. A fastening arrangement as claimed in any preceding claim wherein both the projection (50) and the recess (48) include arcuate portions which, when co-operating, permit pivotal movement of the first part.

7. A toilet seat (10) incorporating a fastening arrangement as claimed in any preceding claim.

8. A toilet seat as claimed in Claim 7 in which the first part (38) includes a lug (42) arranged to co-operate with the inwardly facing surface of a toilet bowl and the second part (10) comprises the toilet seat.

9. A method of fastening a first part (38) to a second part (10) using the fastening arrangement of claim 1 in order to connect a buffer to a toilet seat, a fastener connecting the first and second parts together, **characterised in that** the method comprises causing translational movement of the first part relative to the second part and then causing the parts to co-operate (48,50) such that relative guided pivotal movement can occur and then securing the first and second parts together.

10. A method as claimed in Claim 9 wherein the method comprises first of all loosely connecting the first (38) and second (10) parts in order that the relative movement can occur before securing the parts together.

11. A method comprising mounting the first part (38) to the second part (10) which comprises a toilet seat (10).

## Patentansprüche

1. Befestigungsvorrichtung zur Verbindung eines Puffers mit einem Toilettensitz, enthaltend einen ersten Teil (38), angeordnet zur Befestigung an einen zweiten Teil (10) mittels eines Befestigungselements, welcher erste und zweite Teil vor der gegenseitigen Befestigung relativ zueinander beweglich sind, wobei der erste und der zweite Teil zueinander sowohl translatorisch als auch schwenkbeweglich sind und zumindest einer der beiden Teile einen Vorsprung (50) und der andere Teil eine Ausnehmung (48) aufweist, **dadurch gekennzeichnet, dass** zumindest ein Teil der Ausnehmung (48) und/oder des Vorsprungs eine gekrümmte Oberfläche besitzt, wobei eine Mehrzahl solcher gekrümmter Oberflächen vorgesehen sind, die translatorisch voneinander beabstandet sind, wobei der erste und der zweite Teil an jeder der Mehrzahl von beabstandeten unterschiedlichen Oberflächen miteinander zusammenwirken können und der erste Teil an jeder beabstandeten Oberfläche in Bezug auf den zweiten Teil schwenkbeweglich ist, wobei diese Schwenkbewegung durch das Zusammenwirken des Vorsprungs (50) mit der Ausnehmung (48) entlang der gekrümmten Oberfläche gesteuert wird.

2. Befestigungsvorrichtung nach Anspruch 1, worin der erste (38) und der zweite (10) Teil aneinander angebracht und vor der gegenseitigen Befestigung der beiden Teile mittels des Befestigungselements sowohl translatorisch als auch schwenkbar in Bezug aufeinander beweglich sind.

3. Befestigungsvorrichtung nach Anspruch 1 oder 2, worin das Befestigungselement so angeordnet ist, dass es zur gegenseitigen Befestigung des ersten Teils (38) und des zweiten Teils (10) in den zweiten Teil (10) eingreift.

4. Befestigungsvorrichtung nach einem der vorhergehenden Ansprüche, worin das Befestigungselement so angeordnet ist, dass es sich durch eine Öffnung im ersten Teil (38) erstreckt.

5. Befestigungsvorrichtung nach Anspruch 4, worin die Öffnung im ersten Teil (38) einen Schlitz (44) aufweist.

6. Befestigungsvorrichtung nach einem der vorhergehenden Ansprüche, worin sowohl der Vorsprung (50) als auch die Ausnehmung (48) gekrümmte Abschnitte aufweisen, die beim Zusammenwirken eine Schwenkbewegung des ersten Teils gestatten.

7. Toilettensitz (10) mit einer Befestigungseinrichtung nach einem der vorhergehenden Ansprüche.

8. Toilettensitz nach Anspruch 7, worin der erste Teil (38) einen Ansatz (42) aufweist, der so angeordnet ist, dass er mit der nach innen gerichteten Fläche eines Toilettenbeckens zusammenwirkt, und der zweite Teil (10) den Toilettensitz umfasst.

9. Verfahren zur Befestigung eines ersten Teils (38) an einen zweiten Teil (10) unter Verwendung der Befestigungsvorrichtung nach Anspruch 1 zwecks Verbindung eines Puffers mit einem Toilettensitz, wobei ein Befestigungselement den ersten mit dem zweiten Teil verbindet, **dadurch gekennzeichnet, dass** das Verfahren das Auslösen einer translatorischen Bewegung des ersten Teils in Bezug auf den zweiten Teil und dann das Auslösen des Zusammenwirkens (48, 50) der Teile zur Ermöglichung der geführten relativen Schwenkbewegung und dann das gegenseitige Befestigen des ersten und zweiten Teils umfasst.

10. Verfahren nach Anspruch 9, worin das Verfahren zur Ermöglichung der Relativbewegung vor dem gegenseitigen Befestigen der Teile zuallererst das lockere Verbinden des ersten (38) mit dem zweiten (10) Teil umfasst.

11. Verfahren umfassend das Anbringen des ersten Teils (38) am zweiten Teil (10), der einen Toilettensitz (10) umfasst.

## Revendications

1. Dispositif de fixation pour connecter un amortisseur à un siège de toilettes, comprenant une première pièce (38) prévue pour être attachée à une deuxième pièce (10) au moyen d'un élément de fixation, les première et deuxième pièces, avant d'être attachées, étant mobiles l'une par rapport à l'autre, les première et deuxième pièces étant mobiles l'une par rapport à l'autre à la fois en translation et en pivotement, et au moins l'une des première et deuxième pièces comportant une protubérance (50) et l'autre de ces pièces comportant un évidement (48), **caractérisé en ce qu'**au moins une partie d'au moins un élément parmi l'évidement (48) et la protubérance comprend une surface incurvée, une pluralité de ces surfaces incurvées étant prévues, espacées en translation les unes des autres, grâce à quoi les première et deuxième pièces peuvent coopérer l'une avec l'autre en chacune des différentes surfaces espacées de ladite pluralité, où à chaque surface espacée, la première pièce est autorisée à pivoter par rapport à la deuxième pièce, ce mouvement pivotant étant contrôlé par la protubérance (50) et l'évidement (48) qui coopèrent, le long de la surface incurvée.

2. Dispositif de fixation selon la revendication 1, dans lequel la première (38) et la deuxième (10) pièces sont fixées l'une à l'autre et sont mobiles à la foi en translation et en pivotement l'une par rapport à l'autre avant que l'élément de fixation n'attache ces pièces ensemble.

3. Dispositif de fixation selon la revendication 1 ou 2, dans lequel l'élément de fixation est prévu pour se mettre en prise avec la deuxième pièce (10) afin d'attacher les première (38) et deuxième (10) pièces ensemble.

4. Dispositif de fixation selon l'une quelconque des revendications précédentes, dans lequel l'élément de fixation est prévu pour s'étendre dans une ouverture réalisée dans la première pièce (38).

5. Dispositif de fixation selon la revendication 4, dans lequel l'ouverture prévue dans la première pièce (38) comprend une fente (44).

6. Dispositif de fixation selon l'une quelconque des revendications précédentes, dans lequel à la fois la protubérance (50) et l'évidement (48) comprennent des parties incurvées qui, lorsqu'elles coopèrent, permettent le mouvement pivotant de la première pièce.

7. Siège de toilettes (10) comportant un dispositif de fixation conforme à l'une quelconque des revendications précédentes.

8. Siège de toilettes selon la revendication 7, dans lequel la première pièce (38) comporte une oreille (42) prévue pour coopérer avec la surface tournée vers l'intérieur d'une cuvette de toilettes et la deuxième pièce (10) comprend le siège de toilettes.

9. Procédé de fixation d'une première pièce (38) sur une deuxième pièce (10) utilisant le dispositif de fixation de la revendication 1 afin de connecter un amortisseur à un siège de toilettes, un élément de fixation connectant les première et deuxième pièces ensemble, **caractérisé en ce que** le procédé comprend le fait de provoquer un mouvement de translation de la première pièce par rapport à la deuxième pièce, puis de faire coopérer les pièces (48, 50) de telle manière qu'un mouvement relatif pivotant et guidé peut se produire, et enfin d'attacher les première et deuxième pièces ensemble.

10. Procédé selon la revendication 9, dans lequel le procédé comprend en premier lieu l'opération consistant à connecter de manière lâche les première (38) et deuxième (10) pièces afin que le mouvement relatif puisse se produire avant d'attacher les pièces ensemble.

11. Procédé comprenant l'opération consistant à assembler la première pièce (38) à la deuxième pièce (10) qui comprend un siège de toilettes (10).
